# EUROPEAN PATENT APPLICATION

(11) **EP 3 418 898 A1**
(43) Date of publication of application: **26.12.2018**
(21) Application number: 16890513.1
(22) Date of filing: 17.02.2016
(51) Int. Cl.: G06F 13/00, G06Q 30/00

(54) **INFORMATION PRESENTATION SYSTEM**

(71) Applicant: Soundpower Corporation, Fujisawa-shi, Kanagawa 2520804 (JP)
(72) Inventor: IRUKAYAMA, Godo, Tokyo 135-0052 (JP); HAYAMIZU, Kohei, Mitaka-shi Tokyo 181-0005 (JP)
(74) Representative: Pfenning, Meinig & Partner mbB
(86) International application number: PCT/JP2016/054547
(87) International publication number: WO 2017/141371

(57) **Abstract**

An information presentation system 1 includes discrimination information transmission devices 10, a mobile terminal 20, and an information provision device 30 and further includes a provision side storage unit 32 that mutually associates and stores terminal discrimination information of the mobile terminal that is the transmission destination of a transmitted target information signal, information for identifying target information included in the transmitted target information signal, information for identifying a target facility related to the target information, and transmission device discrimination information of the discrimination information transmission devices 10 provided in the target facility, a provision side communication unit 31 that receives a terminal side signal transmitted from a terminal side communication unit 21 of the mobile terminal 20, and a provision side decision unit 33a that decides whether the target information included in the transmitted target information signal is used by a user of the mobile terminal 20 based on the transmission device discrimination information and the terminal discrimination information included in the terminal side signal received by the provision side communication unit 31 and the information stored by the provision side storage unit 32.

## Description

### [Technical Field]

The present invention relates to an information presentation system.

### [Background Art]

There is a conventionally known information presentation system that presents information associated with a place visited by a user (see, for example, PTL 1). This conventional information presentation system includes a discrimination information transmission device, having electric power generation means, that is provided on a floor of a visit place visited by the user, a mobile terminal carried by the user, and an information provision server that transmits information. In the discrimination information transmission device and the mobile terminal, when the user steps on the electric power generation means in the visit place and the electric power generation means generates electric power, a discrimination signal including discrimination information about the discrimination information transmission device of the electric power generation means having generated electric power is transmitted from the discrimination information transmission device to the information provision server via the mobile terminal. In addition, the information provision server includes storage means that mutually associates and stores discrimination information for uniquely discriminating the device discrimination information transmission device, place identification information for identifying the place in which the device discrimination information transmission device is provided, and target information to be presented and the information provision server identifies the target information associated with the place visited by the user and transmits and presents the identified information to the mobile terminal based on discrimination information included in the received discrimination signal and the information stored in the storage means when receiving the discrimination signal transmitted from the discrimination information transmission device via the mobile terminal.

### [Prior Art Document]

### [Patent Document]

Patent Literature 1: JP-A-2015-187766

### [Summary of the Invention]

### [Problems to be Solved by the Invention]

However, the information presentation system in Patent Literature 1 only presents the target information previously associated with the place discrimination information in a fixed manner in the storage means of the information provision server regardless of whether the target information matches the needs of the user of the mobile terminal, so there is room for improvement from the viewpoint of providing the user of the mobile terminal with useful information that matches the needs of the user.

The invention addresses the above problem with an object of providing an information presentation system capable of providing a user of a mobile terminal with useful information that matches the needs of the user.

### [Means for Solving the Problems]

In order to solve the above problem and achieve the above object, an information presentation system according to claim 1, comprising: a discrimination information transmission device; a mobile terminal; and an information provision device that transmits, to the mobile terminal, a target information signal including target information that is information about a target facility, wherein the discrimination information transmission device includes electric power generation means being fixed to the target facility and generates electric power using environment energy, discrimination side storage means that stores transmission device discrimination information for uniquely discriminating the discrimination information transmission device, and discrimination side transmission means that wirelessly transmits a discrimination side signal including the transmission device discrimination information stored by the discrimination side storage means using the electric power generated by the electric power generation means when a transmission condition is met, wherein the mobile terminal includes terminal side storage means that stores terminal discrimination information for uniquely discriminating the mobile terminal, terminal side reception means that receives the discrimination side signal transmitted from the discrimination side transmission means of the discrimination information transmission device, and terminal side transmission means that wirelessly transmits a terminal side signal including the transmission device discrimination information included in the discrimination side signal received by the terminal side reception means and the terminal discrimination information stored by the terminal side storage means, and wherein the information provision device includes provision side storage means that mutually associates and stores the terminal discrimination information of the mobile terminal that is a transmission destination of the transmitted target information signal, information for identifying the target information included in the transmitted target information signal, information for identifying the target facility related to the target information, and the transmission device discrimination information of the discrimination information transmission device having the electric power generation means provided in the target facility, provision side reception means that receives the terminal side signal transmitted from the terminal side transmission means of the mobile terminal, and provision side decision means that makes a decision as to whether the target information included in the transmitted target information signal has been used by a user of the mobile terminal based on the transmission device discrimination information and the terminal discrimination information included in the terminal side signal received by the provision side reception means and the information stored by the provision side storage means.

The information presentation system according to claim 2 is the information presentation system according to claim 1, wherein the information provision device includes provision side determination means that determines the target information to be transmitted based on a result of the decision by the provision side decision means, and provision side transmission means that wirelessly transmits the target information signal including the target information determined by the provision side determination means to the mobile terminal.

The information presentation system according to claim 3 is the information presentation system according to claim 2, wherein the provision side determination means of the information provision device estimates a section to which the user of the mobile terminal belongs and determines the target information to be transmitted based on the estimated section.

The information presentation system according to claim 4 is the information presentation system according to anyone of claims 1 to 3, wherein the electric power generation means of the discrimination information transmission device is floor type electric power generation means that generates electric power using a pressure caused when a person directly or indirectly steps on the electric power generation means.

### [Advantage of the Invention]

According to the information presentation system according to claim 1, since the presentation of the target information to the user and the decision of use of the presented target information by the user can be performed by deciding whether the target information included in the transmitted target information signal has been used by the user of the mobile terminal, the useful target information suitable to the needs of the user can be presented to the user.

According to the information presentation system according to claim 2, since, for example, the decision of use of the target information by the user, the determination of the target information to be transmitted based on the decision result, and the transmission of the determined target information can be repeated in sequence by determining the target information to be transmitted and wirelessly transmitting the target information signal including the determined target information, more useful target information suitable to the needs of the user can be presented to the user. Especially, by performing the processes repeatedly, it is possible to build a cycle in which an accuracy of selection of useful target information is improved, thereby the user usefulness is further improved, thereby an accuracy of selection of useful target information is further improved, so that it will be possible to establish a commercially advantageous position.

According to the information presentation system according to claim 3, by estimating the sets (sections) to which the users of the mobile terminal belong and determining the target information to be transmitted based on the estimated sets, for example, the target information to be transmitted can be determined for each of the estimated sections. Accordingly, the target information that is useful to the user can be grasped and used for each of the sections and useful target information can be presented by narrowing target (that is, the users to which the target information is presented) for each of the sections.

According to the information presentation system according to claim 4, since a discrimination side signal including the transmission device discrimination information is transmitted when electric power is generated by a pressure caused when a person directly or indirectly steps on the electric power generation unit fixed to a target facility, it is possible to recognize that the user has visited the target facility based on, for example, the transmission device discrimination information included in the discrimination side signal and improve the usefulness of the target information to be presented to the user.

[Fig. 1] Fig. 1 a side view illustrating the installation state of an information presentation system according to an embodiment.
[Fig. 2] Fig. 2 is a block diagram illustrating the information presentation system.
[Fig. 3] Fig. 3 is an enlarged cross sectional view illustrating a discrimination information transmission device in Fig. 1 when a movable plate has not been displaced.
[Fig. 4] Fig. 4 is an enlarged cross sectional view illustrating the discrimination information transmission device in Fig. 1 when the movable plate has been displaced.
[Fig. 5] Fig. 5 is a perspective view illustrating the discrimination information transmission device in Fig. 1 seen from obliquely upward.
[Fig. 6] Fig. 6 is an exploded perspective view illustrating an electric power generation module.
[Fig. 7] Fig. 7 is an exploded perspective view illustrating the electric power generation module.
[Fig. 8] Fig. 8 illustrates an example of the configuration of a set information table.
[Fig. 9] Fig. 9 illustrates an example of the configuration of a factor information table.
[Fig. 10] Fig. 10 illustrates an example of the configuration of an estimated information table.
[Fig. 11] Fig. 11 illustrates an example of the configuration of a transmitted information table.
[Fig. 12] Fig. 12 illustrates an example of the configuration of an aggregated information table.
[Fig. 13] Fig. 13 is a flowchart illustrating information provision processing.
[Fig. 14] Fig. 14 is a flowchart illustrating information update processing.

### [Detailed Description of Embodiments]

An information presentation system according to an embodiment of the invention will be described in detail below with reference to the drawings. However, the invention is not limited by the embodiment.

The information presentation system according to the invention includes a discrimination information transmission device, a mobile terminal, and an information provision device and presents target information to a user of the mobile terminal.

The "target information" represents information transmitted from the information provision device to the mobile terminal and presented to the mobile terminal, provides the user of the mobile terminal with added value about a target facility, and specifically includes voice information, still image information, moving image information, alert sounds from a speaker, vibrations by a vibrator, programs installed in the mobile terminal, control commands or control parameters for controlling the program to be installed in the mobile terminal, and information obtained by combining such information. For example, when the mobile terminal is used in a shop, a theme park, an airport, or the like that is the target facility, the target information is information (product information, business hours, floor guide, image of a character of the theme park, flight information) about the shop, the theme park, or the airport. The "target facility" is a facility related to the target information and specifically a facility visited by the user of the mobile terminal for which the target information is provided and includes, for example, a shop, a theme park, or the like. The following describes the case in which the target facility is a shop and the target information about the shop is provided.

The "discrimination information transmission device" represents a device that wirelessly transmits a discrimination side signal and is specifically installed in the target facility so as to enable wireless communication with the mobile terminal of the user having visited the target facility regardless of whether the mobile terminal is present outdoors or indoors. Since the specific structure of this discrimination information transmission device is arbitrary, for example, the function for transmitting a discrimination side signal may be added to a known general information device or the discrimination information transmission device may be configured as a special device for transmitting a discrimination side signal. In particular, since the discrimination information transmission device is configured to transmit discrimination information using electric power generated from environment energy, the discrimination information transmission device can be installed in a place where a commercial power source cannot be used or can be installed without concerning about problems with the service life of a battery. The "discrimination side signal" is a wireless signal transmitted by the discrimination information transmission device and specifically includes at least transmission device discrimination information for uniquely discriminating the discrimination information transmission device. The "environment energy" means energy that is present in various forms in the environment and this includes, for example, light, heat, pressures (including water power or wave power), sounds, vibrations, electric waves, and the like. Electric power obtained by electric power generation (environmental electric power generation) using such environment energy can be utilized regardless of the type or principle thereof. The following describes the case in which the electric power generation means is configured using environment energy as "floor type electric power generation means" that generates electric power using a pressure caused when a person directly or indirectly steps on the electric power generation means.

The "mobile terminal" represents a device that wirelessly transmits a terminal side signal and a movable information terminal and includes, for example, a mobile phone including a smart phone, a tablet computer, a PDA (Personal Digital Assistance), a wearable device such as a spectacles computer or a wrist watch computer, and a navigation device installed in a vehicle. The following describes the case in which the information terminal is a smart phone. The "terminal side signal" is a wireless signal transmitted by the mobile terminal and specifically includes at least transmission device discrimination information and terminal discrimination information for uniquely discriminating a mobile terminal.

The "information provision device" represents a device that wirelessly transmits a target information signal and is specifically installed so as to enable wireless communication with the mobile terminal regardless of whether the mobile terminal is present outdoors or indoors. Since the specific structure of this information provision device is arbitrary, for example, the function for transmitting the target information signal may be added to a known general information server device or the information provision device may be configured as a special device for transmitting the target information signal. The "target information signal" is a wireless signal transmitted by the information provision device and specifically includes at least the target information. The following describes the case in which the information provision device is a special device that transmits the target information signal.

Although the correspondence among the discrimination information transmission device, the mobile terminal, and the information provision device can be determined arbitrarily and at least one discrimination information transmission device, mobile terminal, and information provision device only need to be provided, the following describes the case in which one information provision device is installed so as to correspond to a plurality of discrimination information transmission devices and a plurality of mobile terminals.

### (Structure)

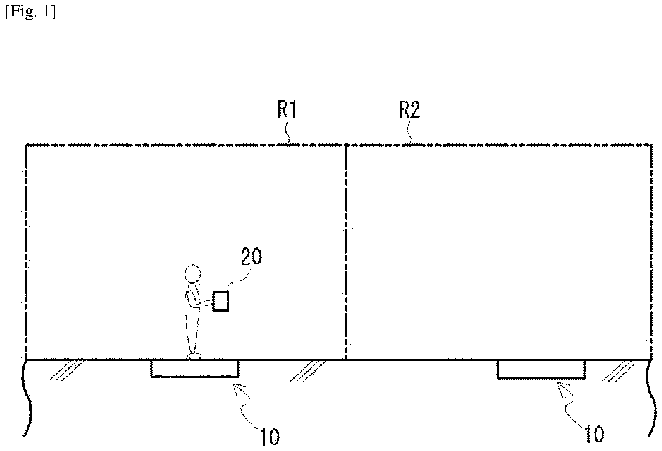

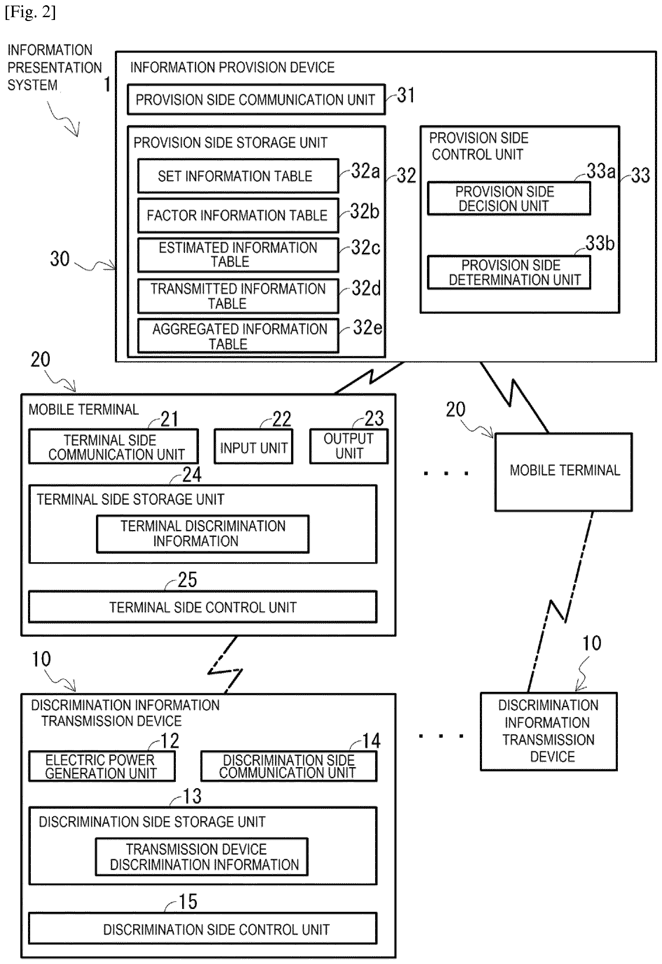

First, the structure of the information presentation system according to the embodiment will be described. Fig. 1 is a side view illustrating the installation state of the information presentation system according to the embodiment and Fig. 2 is a block diagram illustrating the information presentation system. As illustrated in Figs. 1 and 2, an information presentation system 1 includes a plurality of discrimination information transmission devices 10, a plurality of mobile terminals 20, and one information provision device 30. The discrimination information transmission devices 10 are installed in target facilities and, specifically, one discrimination information transmission device 10 is installed on the floor of a shop R1 and one discrimination information transmission device 10 is installed on the floor of a shop R2, which is different from the shop R1. More specifically, the discrimination information transmission devices 10 may be installed on any floor, that is, for example, the floor at the entrance of the shop R1 or R2, the floor of a corridor, the floor near a particular product, or the floor near a cash register for paying money. However, it is assumed that the discrimination information transmission devices 10 are installed on the floor near a cash register. Each of the plurality of mobile terminals 20 is held by one user for which the target information is provided. The information provision device 30 is installed in a server room (not illustrated) of an information management center. Since the plurality of discrimination information transmission devices 10 can be configured as the same devices except the transmission device discrimination information to be stored and the plurality of mobile terminals 20 can be configured as the same terminals except the terminal discrimination information to be stored, one discrimination information transmission device 10 and one mobile terminal 20 will be described in the following description of the structure.

### (Structure - discrimination information transmission device)

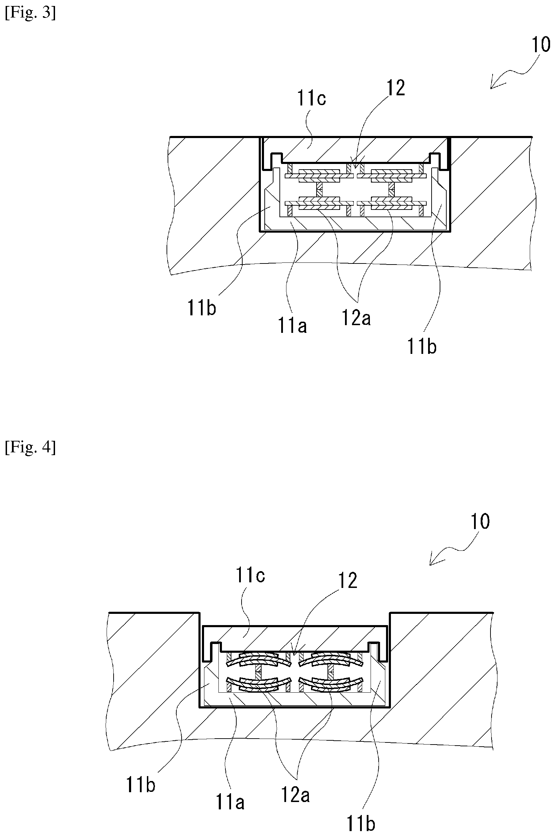

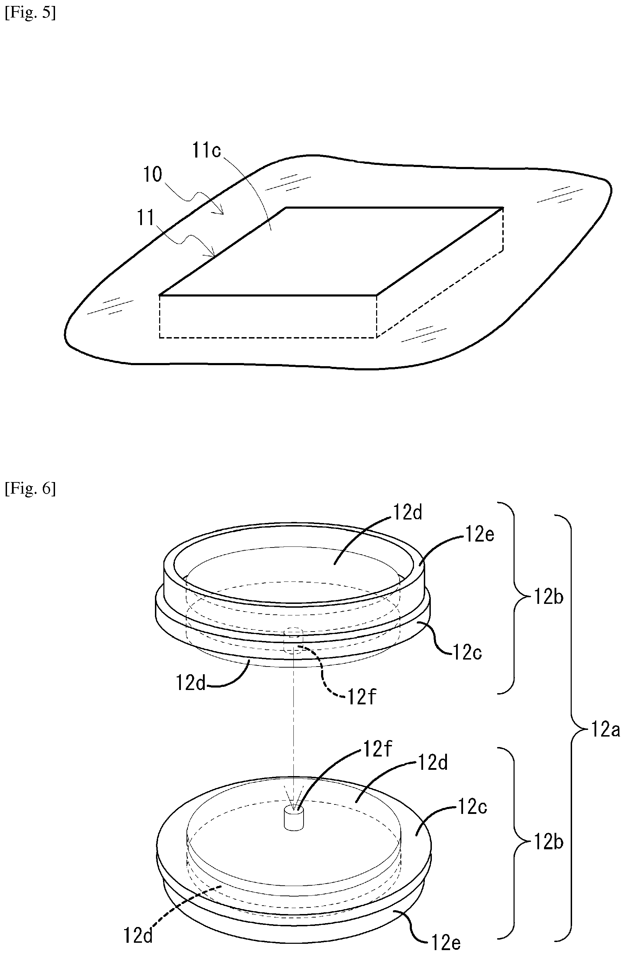

First, the discrimination information transmission device 10 will be described. Fig. 3 is an enlarged cross sectional view illustrating the discrimination information transmission device 10 in Fig. 1 when a movable plate has not been displaced and Fig. 4 is an enlarged cross sectional view illustrating the discrimination information transmission device 10 in Fig. 1 when the movable plate has been displaced, and Fig. 5 is a perspective view illustrating the discrimination information transmission device 10 in Fig. 1 seen from obliquely upward. This discrimination information transmission device 10 includes, in a cabinet 11, an electric power generation unit 12, a discrimination side storage unit 13 in Fig. 2, a discrimination side communication unit 14 in Fig. 2, and a discrimination side control unit 15 in Fig. 2.

### (Structure - discrimination information transmission device - cabinet)

The user can walk on the cabinet 11 in Fig. 5 and the cabinet 11 is displaced by an external force caused by the walking. This cabinet 11 is formed in a hollow rectangular parallelepiped as a whole and includes a fixed plate 11a, supporting plates 11b, and a movable plate 11c in Fig. 3. The fixed plate 11a is a plate-like body fixed to the installation surface (not illustrated) and the upper surface thereof is flat. The supporting plates 11b are plate-like bodies disposed so as to stand from the fixed plate 11a toward the movable plate 11c. The movable plate 11c is a plate-like body disposed movably with respect to the fixed plate 11a and the movable plates 11c are provided side by side horizontally at the upper end of the cabinet 11. The perimeter of each of the movable plates 11c is supported by the supporting plates 11b in a known fitting structure. In the state (non-pressed state) in which no external force is applied to the movable plate 11c in this structure, the movable plate 11c becomes horizontal. In contrast, in the state in which an external force is applied to the movable plate 11c, the movable plate 11c is deformed toward the fixed plate 11a as illustrated in Fig. 4 and the movable plate 11c becomes non-horizontally. The cabinet 11 configured as described above is made of, for example, metal, resin, or wood so as to have a sufficient strength capable of enduring repeated external loads.

### (Structure - discrimination information transmission device - electric power generation unit)

The electric power generation unit 12 is electric power generation means that generates electric power using environmental energy and, particularly in the embodiment, the electric power generation unit 12 is configured as "the floor type electric power generation means" in which the electric power generation unit generates electric power using a pressure caused when a person directly or indirectly steps on the electric power generation unit. This electric power generation unit 12 is disposed in the position within the cabinet 11 corresponding to the movable plate 11c.

### (Structure - discrimination information transmission device - electric power generation unit - electric power generation module)

The electric power generation unit 12 includes at least one (two in Figs. 3 and 4) electric power generation module 12a and generates electric power when piezoelectric elements 12d, which will be described later, of the electric power generation module 12a are pressed and deformed via the movable plate 11c in the state in which the movable plate 11c is moved by an external force toward the fixed plate 11a.

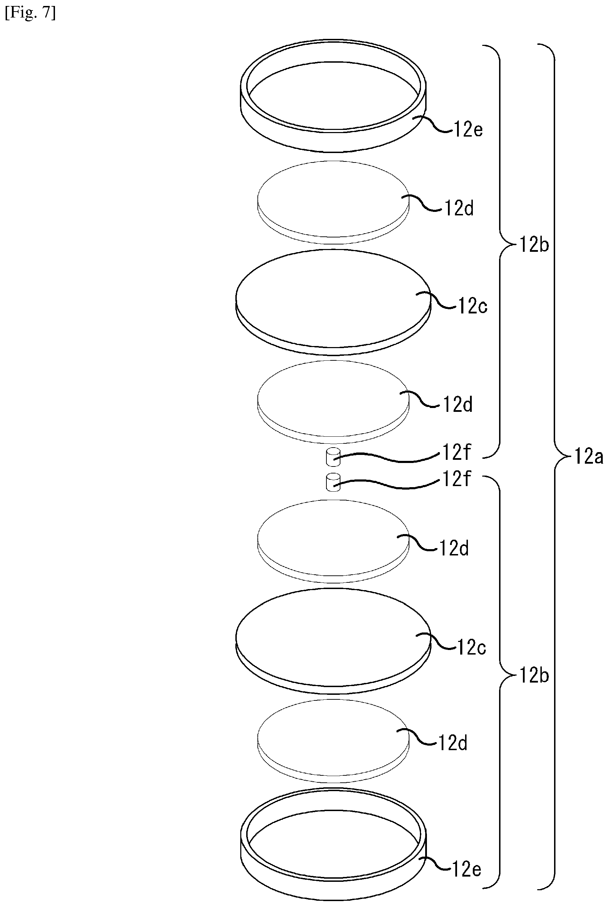

Figs. 6 and 7 are exploded perspective views illustrating the electric power generation module 12a. As illustrated in these views, the electric power generation module 12a includes a pair of electric power generation bodies 12b laminated with each other. Each of the electric power generation bodies 12b includes a diaphragm 12c, the pair of piezoelectric elements 12d, a peripheral spacer 12e, and a central spacer 12f.

The diaphragm 12c is a supporting member that applies a stress to the piezoelectric elements 12d and also a reinforcing material that reinforces the anti-crack strength of the piezoelectric elements 12d and the diaphragm 12c is made of a material (for example, a thin plate of stainless steel) having flexibility and durability. Although the planar shape of the diaphragm 12c is arbitrary, the planar shape of the diaphragm 12c is a circular plate-like body in the embodiment since the diaphragm 12c is preferably deformed evenly by an external force.

The pair of piezoelectric elements 12d are electric power generating bodies that are disposed in the cabinet 11 and generate electric power when deformed by displacement of the cabinet 11 and the piezoelectric elements 12d are made of piezoelectric ceramic such as, for example, barium titanate or zirconia or a piezoelectric monocrystal such as lithium tantalate (LiTaO₃). The piezoelectric elements 12d are fixed to the diaphragm 12c via a bond or the like on both sides of the diaphragm 12c. Although the planar shape of the piezoelectric elements 12d is arbitrary, the planar shape of the piezoelectric elements 12d is a circular plate-like body having a diameter smaller than that in the diaphragm 12c in the embodiment since the planar shape is preferably geometrically similar to the diaphragm 12c. Although the disposition position in plan view of the piezoelectric elements 12d with respect to the diaphragm 12c is also arbitrary, since the amount of deformation of the diaphragm 12c is maximized at the center in plan view, the piezoelectric elements 12d are preferably disposed at the center in plan view, the piezoelectric elements 12d are disposed concentrically with the diaphragm 12c in the embodiment. Although not illustrated, the piezoelectric elements 12d have a positive terminal on one surface thereof and a negative terminal on the other surface thereof, a positive lead wire connected to the positive terminal and a negative lead wire connected to the negative terminal are drawn, and these lead wires are connected to individual parts of the discrimination information transmission device 10 via a power supply circuit (not illustrated). However, various types of electric elements such as known bridge circuits may be disposed between the piezoelectric elements 12d and the power supply circuit. Alternatively, it is possible to use any material that can generate electric power by receiving an external force (including a force causing strain, bending, or compression) as the piezoelectric elements 12d or in place of the piezoelectric elements 12d. For example, an ionic polymer metal composite material (IPMC) obtained by plating metal (such as gold) on both surfaces of an ionic conductive polymer film (gelling), an ionic conducting polymergel film (ICPF), or artificial muscle including IPMC or ICPF can be used.

The peripheral spacer 12e forms the mutual intervals among the diaphragm 12c, the piezoelectric elements 12d, and the fixed plate 11a. With this, the peripheral spacer 12e enables the piezoelectric elements 12d to deform together with the diaphragm 12c and generate electric power and functions as a stopper for preventing the diaphragm 12c and the piezoelectric elements 12d from deforming by a predetermined amount or more and being broken. This peripheral spacer 12e is disposed so as to make contact with the position close to the outer edge of the diaphragm 12c and fixed to the diaphragm 12c via a bond. In addition, the peripheral spacer 12e is formed to become higher than the thickness of the piezoelectric elements 12d so that the piezoelectric elements 12d can deform together with the diaphragm 12c. Although the specific shape of the peripheral spacer 12e is arbitrary, since the peripheral spacer 12e preferably makes contact with the diaphragm 12c evenly to distribute the force, the peripheral spacer 12e is formed to surround the piezoelectric elements 12d as an annular body disposed concentrically with the diaphragm 12c in the embodiment.

When the user walks on an electric power generation panel 10 having such a structure, the movable plate 11c moves toward the fixed plate 11a if an external force is applied to the electric power generation panel 10, the movable plate 11c presses the peripheral spacer 12e downward to deform the diaphragm 12c, and the piezoelectric elements 12d are thereby deformed to generate electric power.

In addition, the central spacer 12f forms the mutual interval between the electric power generation bodies 12b and transfers the pressing force of the movable plate 11c from one of the electric power generation bodies 12b to the other of the electric power generation bodies 12b. The central spacer 12f makes contact with one (the piezoelectric element 12d away from the peripheral spacer 12e in this case) of the pair of piezoelectric elements 12d fixed to the diaphragm 12c, is disposed near the center of the piezoelectric elements 12d, and is fixed to the piezoelectric elements 12d via a bond or the like. Although the central spacer 12f of the lower electric power generation body 12b is separated from the central spacer 12f of the upper electric power generation body 12b in this example, these central spacers 12f may be formed integrally with each other as one spacer.

### (Structure - discrimination information transmission device - discrimination side storage unit)

The discrimination side storage unit 13 in Fig. 2 is recording means that records programs and various types of data necessary for the operation of the discrimination information transmission device 10. Although the discrimination side storage unit 13 includes, for example, a hard disc (not illustrated) as an external recording device, any other recording media including semiconductor recording media such as an EEPROM or a DRAM, a magnetic recording medium such as a magnetic disc, or an optical recording medium such as a DVD or a Blu-ray Disc in place of the hard disc or together with the hard disc (this is also true for a terminal side storage unit 24 of the mobile terminal 20 and a provision side storage unit 32 of the information provision device 30, which will be described later).

In particular, the discrimination side storage unit 13 is configured as discrimination side storage means that stores transmission device discrimination information for uniquely discriminating the discrimination information transmission device 10.

### (Structure - discrimination information transmission device - discrimination side communication unit)

The discrimination side communication unit 14 is communication means that communicates with the mobile terminal 20 and is particularly the discrimination side transmission means that wirelessly transmits the discrimination side signal including the transmission device discrimination information stored by the discrimination side storage unit 13 using the electric power generated by the electric power generation unit 12 when the transmission condition is met. Although the specific structure and communication method of the discrimination side communication unit 14 are arbitrary, the discrimination side communication unit 14 performs short-distant wireless communication based on a short-distant wireless communication standard such as Bluetooth (registered trademark), BLE (Bluetooth Low Energy), or iBeacon (registered trademark) in the embodiment using a known structure. It should be noted that "the transmission condition" will be described later.

### (Structure - discrimination information transmission device - discrimination side control unit)

The discrimination side control unit 15 in Fig. 2 is control means that controls the discrimination information transmission device 10. Specifically, this discrimination side control unit 15 is a computer including a CPU, various types of programs (including a basic control program such as an OS and application programs started on the OS to achieve specific functions) interpreted and executed by the CPU, and an internal memory such as a RAM in which programs and various types of data are stored (this is true for a terminal side control unit 25 of the mobile terminal 20 and a provision side control unit 33 of the information provision device 30, which will be described later). Programs for the discrimination information transmission device are installed in the discrimination side control unit 15 via any recording medium or a network to substantially achieve individual parts of the discrimination side control unit 15. Details on the processing performed by the individual parts of the discrimination side control unit 15 will be described later.

### (Structure - mobile terminal)

Next, the mobile terminal 20 will be described. As illustrated in Fig. 1, the mobile terminal 20 includes a terminal side communication unit 21, an input unit 22, an output unit 23, the terminal side storage unit 24, and the terminal side control unit 25.

### (Structure - mobile terminal - terminal side communication unit)

The terminal side communication unit 21 is communication means that communicates with the discrimination information transmission device 10 and communicates with the information provision device 30, particularly terminal side reception means that receives the discrimination side signal transmitted from the discrimination side communication unit 14 of the discrimination information transmission device 10, and terminal side transmission means that wirelessly transmits the terminal side signal including the transmission device discrimination information included in the discrimination side signal received by the terminal side communication unit 21 and the terminal discrimination information stored by the terminal side storage unit 24. Although the specific structure and communication method of the terminal side communication unit 21 are arbitrary, the terminal side communication unit 21 performs short-distant wireless communication with the discrimination side communication unit 14 based on a short-distant wireless communication standard such as Bluetooth (registered trademark) using a known structure in the embodiment and performs wireless communication via a network such as the Internet with a provision side communication unit 31, which will be described later, using a known structure.

### (Structure - mobile terminal - input unit)

The input unit 22 is input means through which the user inputs information to the mobile terminal 20. Although the specific structure of the input unit 22 is arbitrary, the input unit 22 is configured as, for example, a known touch pad through which the user manually inputs various types of data by depression with a finger or the like. This touch pad is transparent or translucent and superimposed on the display surface on the front surface of the display included in the output unit 23, which will be described later, as a touch panel. As the touch pad, a known touch pad having operation position detection means based on, for example, the resistance film system or capacitance system can be used.

### (Structure - mobile terminal - output unit)

The output unit 23 is output means through which information from the mobile terminal 20 is output to the outside (user). Although the specific structure of the output unit 23 is arbitrary, the output unit 23 is configured as, for example, a display and a speaker. Since the specific structure of the display is arbitrary, a flat panel display such as a known liquid crystal display or an organic EL display can be used. Since the specific structure of the speaker is also arbitrary, a known piezo film speaker can be used.

### (Structure - mobile terminal - terminal side storage unit)

The terminal side storage unit 24 is recording means that records the programs and various types of data necessary for the operation of the mobile terminal 20 and particularly terminal side storage means that records the terminal discrimination information for uniquely discriminating the mobile terminal 20.

### (Structure - mobile terminal - terminal side control unit)

The terminal side control unit 25 is control means that controls the mobile terminal 20. Programs for the mobile terminal are installed in the terminal side control unit 25 via any recording medium or a network to substantially configure individual parts of the terminal side control unit 25. Details on the processing performed by the individual parts of the terminal side control unit 25 will be described later.

### (Structure - information provision device)

Next, the information provision device 30 will be described. As illustrated in Fig. 2, the information provision device 30 includes the provision side communication unit 31, the provision side storage unit 32, and the provision side control unit 33.

### (Structure - information provision device - provision side communication unit)

The provision side communication unit 31 is communication means that communicates with the mobile terminal 20, particularly provision side reception means that receives a terminal side signal transmitted from the terminal side communication unit 21 of the mobile terminal 20, and provision side transmission means that wirelessly transmits a target information signal including the target information determined by a provision side determination unit 33b, which will be described later to the mobile terminal 20. Although the specific structure and communication method of the provision side communication unit 31 are arbitrary, the provision side communication unit 31 wirelessly communicates with the terminal side communication unit 21 via a network such as the Internet in the embodiment using a known structure.

### (Structure - information provision device - provision side storage unit)

The provision side storage unit 32 is recording means that records the programs and various types of data (data including target information itself) necessary for the operation of the information provision device 30 and particularly provision side storage means that records a set information table 32a, a factor information table 32b, an estimated information table 32c, a transmitted information table 32d, and an aggregated information table 32e.

The "set information table" 32a includes information about the sets (that is, sections) to which the users of the mobile terminal 20 belong and specifically information for identifying the information corresponding to the sets when the users are classified into a plurality of sets based on a predetermined classification reference. The "predetermined classification reference" is the reference determined in advance to classify the users and may be any reference. However, it is assumed that the reference for classification based on, for example, the range of values of factor information is used. Although the "factor information" is information used as factors for classifying the users and may be any information including gender information, age information, purchasing trend information, appearance preference information, complexity information, use place information, and the like, it is assumed that, for example, gender information and age information are used in the following description. The "gender information" identifies the gender of a user and includes, for example, information for identifying the gender itself (for example, male or female) or information for identifying the gender tendency (such as, for example, masculine or effeminate). In addition, the "age information" identifies the age of a user and includes, for example, information for identifying the age itself (young (for example, at least 15 but less than 30), middle (for example, at least 30 but less than 55), and old (for example, 55 or more) or information for identifying the age tendency (such as, for example, young side or old side). In addition, the "purchasing trend information" identifies the trend of the price of the user's purchasing target by the user and includes, for example, information for identifying the trend itself (low price (for example, trend for purchasing commodities less than 2000 yen) or high price (for example, trend for purchasing commodities equal to or more than 2000 yen)) or information for identifying the trend tendency (such as, for example, low price side or high price side). In addition, the "appearance preference information" identifies the preference of the appearance of the user's purchasing target and includes, for example, information for identifying the preference itself (for example, showy or conservative) or information for identifying the preference tendency (such as, for example, showy side or conservative side). In addition, the "complexity information" identifies the complexity of the user's purchasing target and includes, for example, information for identifying the complexity itself (for example, simple operation or complicated operation) or information for identifying the complexity tendency (such as, for example, simple side or complicated side). In addition, the "use place information" identifies the place where user's purchasing target is used and includes, for example, information for identifying the use place itself (for example, indoor or outdoor) or information for identifying the use place tendency (such as, for example, indoor side or outdoor side). In the following description, when the "gender information" of the "factor information" is information for identifying the gender tendency, specifically, the gender tendency is identified by a positive or negative real number and when the "age information" of the "factor information" is information for identifying the "age tendency", specifically, the age tendency is identified by a positive or negative real number. More specifically, as for the "gender information", the value range having a lower limit value of "-10" and an upper limit value of "+10" ("+" for indicating a positive value is omitted as appropriate below) is used, and the value becomes larger (that is, "+10" is the strongest tendency toward a male) as the tendency toward a male becomes strong and the value becomes smaller (that is, "-10" is the strongest tendency toward a female) as the tendency toward a female becomes strong in the following description. In addition, as for the "age information", the value range having a lower limit value of "-10" and an upper limit value of "+10" is used as in the "gender information", and the value becomes larger (that is, "+10" is the strongest tendency toward an old person) as the tendency toward an old person becomes strong and the value becomes smaller (that is, "-10" is the strongest tendency toward a young person) as the tendency toward a young person becomes strong in the following description. It is assumed that a "young person" and an "old person" can surely perform purchase alone, the "youngest" person is about 10 years old, and the "oldest" person is about 90 years old.

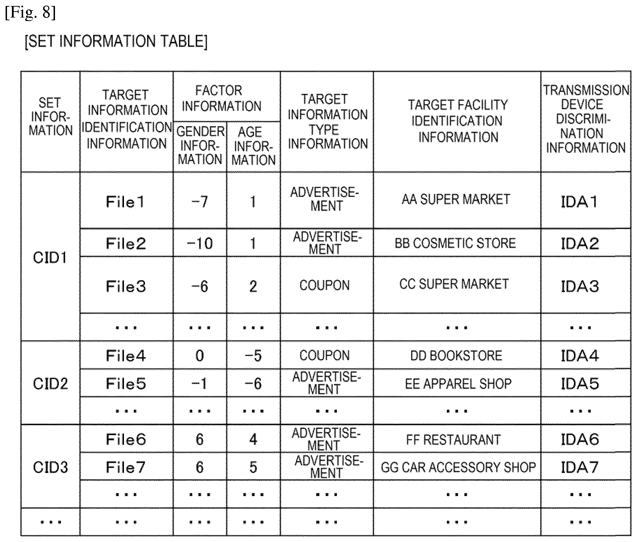

Fig. 8 illustrates an example of the configuration of the set information table 32a. This set information table 32a includes an item "SET INFORMATION", an item "TARGET INFORMATION IDENTIFICATION INFORMATION", an item "FACTOR INFORMATION", an item "TARGET INFORMATION TYPE INFORMATION", an item "TARGET FACILITY IDENTIFICATION INFORMATION", and an item "TRANSMISSION DEVICE DISCRIMINATION INFORMATION" and these items are associated with the corresponding information. The information corresponding to the item "SET INFORMATION" is set information for identifying the sets into which the users are classified based on the above predetermined classification reference (set discrimination information for uniquely discriminating individual sets, such as "CID1" in Fig. 8). In addition, the information corresponding to the item "TARGET INFORMATION IDENTIFICATION INFORMATION" is target information identification information for uniquely identifying the target information to be transmitted to the mobile terminal 20 in Fig. 2 (file name of target information stored in the provision side storage unit 32 in Fig. 2, such as "File1" in Fig. 8). In addition, the item "FACTOR INFORMATION" includes an item "GENDER INFORMATION" and an item "AGE INFORMATION". The information corresponding to the item "GENDER INFORMATION" of the item "FACTOR INFORMATION" is gender information (real number described above, such as "-7" in Fig. 8). The information corresponding to the item "AGE INFORMATION" of the item "FACTOR INFORMATION" is age information (real number described above, such as "1" in Fig. 8). In addition, the information corresponding to the item "TARGET INFORMATION TYPE INFORMATION" is information for identifying the type of target information ("ADVERTISEMENT", "COUPON", or the like in Fig. 8). It should be noted that "ADVERTISEMENT" indicates that the target information reports sale products, new products, or the like in the shop and "COUPON" indicates that the target information can be used for discount during purchasing of products in the shop. In addition, the information corresponding to the item "TARGET FACILITY IDENTIFICATION INFORMATION" is target facility identification information for uniquely identifying a target facility (name of a target facility, such as "AA SUPER MARKET" or the like in Fig. 8). It should be noted that the "AA SUPER MARKET" is assumed to be the name of the shop R1 in Fig. 1 in the following description. In addition, the item "TRANSMISSION DEVICE DISCRIMINATION INFORMATION" in Fig. 8 is transmission device discrimination information ("IDA1" or the like in Fig. 8). It should be noted that "IDA1" is the transmission device discrimination information of the discrimination information transmission device 10 for which individual parts are specifically indicated in Fig. 2 and "IDA2" to "IDA7" are the transmission device discrimination information of other discrimination information transmission devices 10. Recording to this set information table 32a is performed based on the questionnaire of the users based on the predetermined classification reference described above, the history of searches performed by the users via computers, and the like.

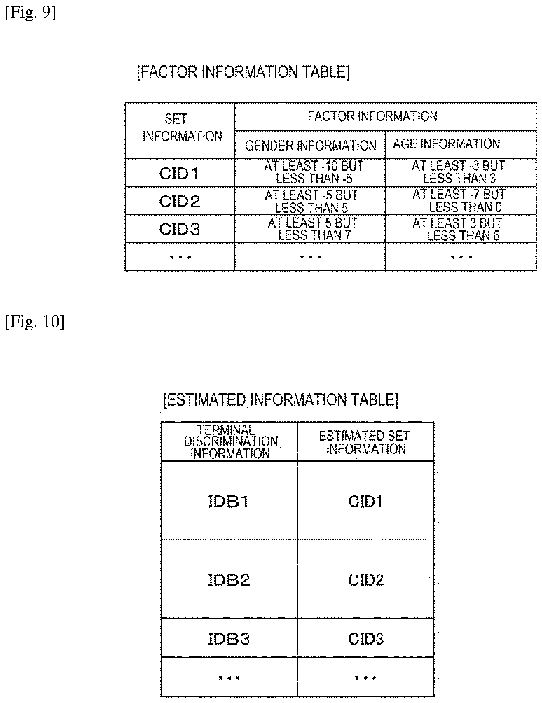

In addition, the "FACTOR INFORMATION TABLE" 32b in Fig. 2 includes information about factor information for classifying the users, that is, information for defining set information. Fig. 9 illustrates an example of the configuration of the factor information table 32b. This factor information table 32b includes an item "SET INFORMATION" and an item "FACTOR INFORMATION" and these items are associated with the corresponding information. The information corresponding to the item "SET INFORMATION" is identical to the information corresponding to the item having the same name in Fig. 8. In addition, the item "FACTOR INFORMATION" includes an item "GENDER INFORMATION" and an item "AGE INFORMATION". The information corresponding to the item "GENDER INFORMATION" of the item "FACTOR INFORMATION" is gender information (range of real numbers described above, such as "AT LEAST -10 BUT LESS THAN -5" or the like in Fig. 9). The information corresponding to the item "AGE INFORMATION" of the item "FACTOR INFORMATION" is age information (range of real numbers described above, such as "AT LEAST -3 BUT LESS THAN 3" or the like in Fig. 9). Inputting and recording to this factor information table 32b are performed via input means (not illustrated) of the information provision device 30 in Fig. 2.

In addition, the "ESTIMATED INFORMATION TABLE" 32c in Fig. 2 includes estimated information and specifically information about the sets to which the users of the mobile terminal 20 are estimated to belong. Fig. 10 illustrates an example of the configuration of the estimated information table 32c. This estimated information table 32c includes an item "TERMINAL DISCRIMINATION INFORMATION" and an item "ESTIMATED SET INFORMATION" and these items are associated with the corresponding information. The information corresponding to the item "TERMINAL DISCRIMINATION INFORMATION" is terminal discrimination information ("IDB1" or the like in Fig. 10). It should be noted that "IDB1" is the terminal discrimination information of the mobile terminal 20 for which individual parts are specifically indicated in Fig. 2 and "IDB2" and "IDB3" are the terminal discrimination information of other mobile terminals 20. In addition, the information corresponding to the item "ESTIMATED SET INFORMATION" is estimated set information for identifying the sets to which the uses are estimated to belong among the sets corresponding to the item "SET INFORMATION" in Fig. 8 (set discrimination information, such as "CID1" in Fig. 10). Initial values are input to this estimated information table 32c via the input means (not illustrated) of the information provision device 30 in Fig. 2 and then the estimated information table 32c is updated by information update processing described later.

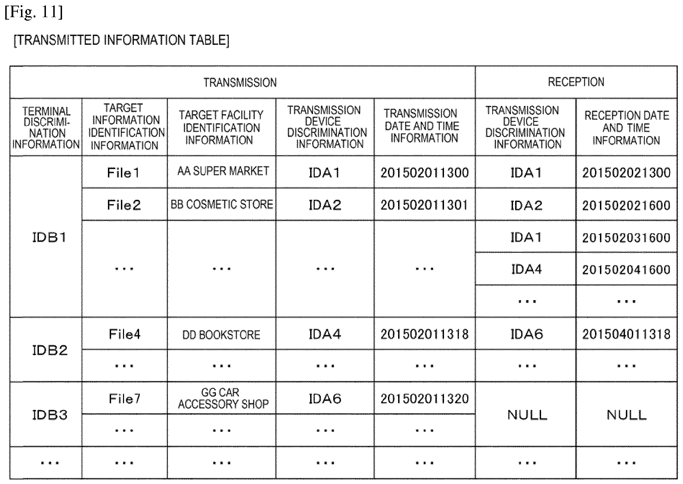

In addition, the "TRANSMITTED INFORMATION TABLE" 32d in Fig. 2 includes information about transmitted information and specifically information about the target information included in the transmitted target information signal. Fig. 11 illustrates an example of the configuration of the transmitted information table 32d. This transmitted information table 32d includes an item "TRANSMISSION" and an item "RECEPTION" and these items are associated with the corresponding information.

First, the item "TRANSMISSION" in Fig. 11 includes an item "TERMINAL DISCRIMINATION INFORMATION", an item "TARGET INFORMATION IDENTIFICATION INFORMATION", an item "TARGET FACILITY IDENTIFICATION INFORMATION", an item "TRANSMISSION DEVICE DISCRIMINATION INFORMATION", and an item "TRANSMISSION DATE AND TIME INFORMATION". The information corresponding to the item "TERMINAL DISCRIMINATION INFORMATION" of the item "TRANSMISSION" is identical to the information corresponding to the item having the same name in Fig. 10. In addition, the information corresponding to the item "TARGET FACILITY IDENTIFICATION INFORMATION" of the item "TRANSMISSION" and the item "TRANSMISSION DEVICE DISCRIMINATION INFORMATION" of the item "TRANSMISSION" is identical to the information corresponding to the items having the same names in Fig. 8. In addition, the information corresponding to the item "TARGET INFORMATION IDENTIFICATION INFORMATION" of the item "TRANSMISSION" is target information identification information for uniquely identifying the target information actually transmitted to the mobile terminal 20 in Fig. 2 (same information as in Fig. 8 and a file name, such as "File1" in Fig. 11). In addition, the information corresponding to the item "TRANSMISSION DATE AND TIME INFORMATION" of the item "TRANSMISSION" is transmission date and time information for identifying the data and time when the target information was transmitted (year, month, date, minute, and second such as "201502011300" in Fig. 11). It should be noted that "201502011300" indicates that the target information was transmitted at 13:00 on February 1, 2015.

Next, the item "RECEPTION" in Fig. 11 includes an item "TRANSMISSION DEVICE DISCRIMINATION INFORMATION" and an item "RECEPTION DATE AND TIME INFORMATION". The information corresponding to the item "TRANSMISSION DEVICE DISCRIMINATION INFORMATION" of the item "RECEPTION" is transmission device discrimination information and specifically transmission device discrimination information (same information as in Fig. 8, such as "IDA1" or "NULL" in Fig. 11) included in the terminal side signal (referred to below as a user matching terminal side signal) including the terminal discrimination information of the item "TERMINAL DISCRIMINATION INFORMATION" of the item "TRANSMISSION" in Fig. 11 among the terminal side signals received by the information provision device 30 in Fig. 2. It should be noted that "NULL" indicates that the "user matching terminal side signal" has not been received. In addition, the information corresponding to the item "RECEPTION DATE AND TIME INFORMATION" of the item "RECEPTION" is the reception date and time information for identifying the date and time when the transmission device discrimination information was received and specifically the information for identifying the date and time when the "user matching terminal side signal" was received ("201502021300" which is the same as the information corresponding to the item "TRANSMISSION DATE AND TIME INFORMATION" of the item "TRANSMISSION", "NULL" described above, or the like in Fig. 11). It should be noted that "201502021300" indicates that the user matching terminal side signal (that is, the transmission device discrimination information) was received at 13:00 on February 2, 2015. Recording to this transmitted information table 32d is performed by information provision processing described later.

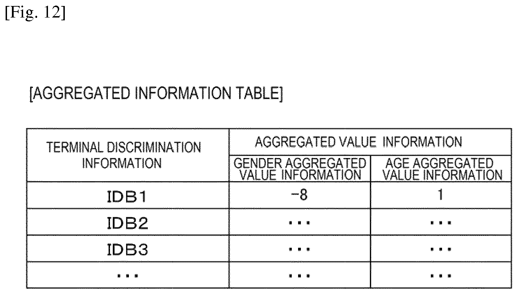

In addition, the "AGGREGATED INFORMATION TABLE" 32e in Fig. 2 includes factor information aggregated based on the information included in the terminal side signal received by the information provision device 30. Fig. 12 illustrates an example of the configuration of the aggregated information table 32e. This aggregated information table 32e includes an item "TERMINAL DISCRIMINATION INFORMATION" and an item "AGGREGATED VALUE INFORMATION" and these items are associated with the corresponding information. The information corresponding to the item "TERMINAL DISCRIMINATION INFORMATION" is identical to the information corresponding to the item having the same name in Fig. 11. In addition, the item "AGGREGATED VALUE INFORMATION" includes an item "GENDER AGGREGATED VALUE INFORMATION" and an item "AGE AGGREGATED VALUE INFORMATION". The information corresponding to the item "GENDER AGGREGATED VALUE INFORMATION" is gender aggregated value information for identifying the aggregated value of gender information (average value described later, such as "-8" in Fig. 12). In addition, the information corresponding to the item "AGE AGGREGATED VALUE INFORMATION" is age aggregated value information for identifying the aggregated value of age information (average value described later, such as "1" in Fig. 12). Recording to this aggregated information table 32e is performed by information update processing described later.

### (Structure - information provision device - provision side control unit)

The provision side control unit 33 in Fig. 2 is control means that controls the information provision device 30. Programs for the information provision device are installed in this provision side control unit 33 via any recording medium or a network to substantially configure the individual parts of the provision side control unit 33. The provision side control unit 33 has a provision side decision unit 33a and the provision side determination unit 33b as functionally conceptual components. The provision side decision unit 33a is provision side decision means that decides whether the user of the mobile terminal 20 has used the target information included in the transmitted target information signal based on the transmission device discrimination information and the terminal discrimination information included in the terminal side signal received by the provision side communication unit 31 and the information stored in the provision side storage unit 32. In addition, the provision side determination unit 33b is provision side determination means that determines the target information to be transmitted based on the decision result by the provision side decision unit 33a. Details on the processing performed by the individual parts of the provision side control unit 33 will be described later.

### (Processing)

Next, the information provision processing and the information update processing performed by the information presentation system 1 configured as described above will be described.

### (Processing - information provision processing)

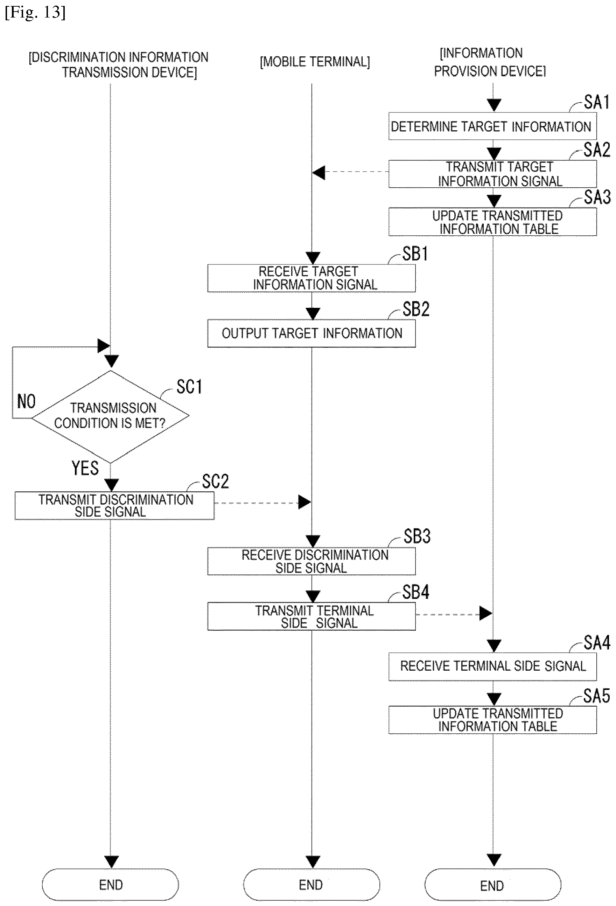

First, the information provision processing will be described. Fig. 13 is a flowchart illustrating the information provision processing (step is abbreviated as "S" in the following description of processing). The "information provision processing" provides target information. Although the timing at which this information provision processing is started is arbitrary, the information provision processing having been started will be described by assuming that the information provision processing is started to be executed repeatedly, for example, at predetermined intervals (such as one day, one week, or two weeks) after the discrimination information transmission device 10, the mobile terminal 20, and the information provision server 30 are powered. In addition, the processing by the discrimination information transmission device 10 whose individual parts are specifically described in Fig. 2 and the mobile terminal 20 whose individual parts are specifically described in Fig. 2 are referred to as "the illustrated case" and will be described.

First, as illustrated in Fig. 13, the provision side determination unit 33b of the information provision device 30 determines the target information to be transmitted in SA1. Specifically, the provision side determination unit 33b determines the target information to be transmitted to the mobile terminal 20 that is the transmission destination based on the set information table 32a and the estimated information table 32c in Fig. 2. More specifically, the provision side determination unit 33b identifies the estimated set information corresponding to the terminal discrimination information of the mobile terminal 20 which is the transmission destination in Fig. 10, obtains the target information identification information corresponding to the identified estimated set information in Fig. 8, and determines the target information identified by the obtained target information identification information as the target information to be transmitted. When there is a plurality of pieces of "target information identification information corresponding to the identified estimated set information", only one piece or a plurality of pieces of the target information identification information may be obtained using any method. However, it is assumed in this example that, for example, one piece is obtained sequentially from the upper side to the lower side in Fig. 8 each time the information provision processing is performed. In the illustrated case, for example, "ESTIMATED SET INFORMATION" = "CID1" corresponding to the "terminal discrimination information of the mobile terminal 20 which is the transmission destination" = "IDB1" is identified in Fig. 10 and "TARGET INFORMATION IDENTIFICATION INFORMATION" = "File1" corresponding to the above identified "ESTIMATED SET INFORMATION" = "CID1" is obtained in Fig. 8, and the target information identified by the obtained "TARGET INFORMATION IDENTIFICATION INFORMATION" = "File1" is determined to be the target information to be transmitted.

Returning to Fig. 13, in SA2, the provision side control unit 33 of the information provision device 30 transmits the target information signal. Specifically, the provision side control unit 33 obtains the terminal discrimination information of the mobile terminal 20, which is the transmission destination, for which the target information to be transmitted has been determined in SA1, obtains the target information determined to be transmitted to the mobile terminal 20 of the obtained terminal discrimination information in SA1, generates a target information signal including the obtained terminal discrimination information and the obtained target information, and wirelessly transmits the generated target information signal to the mobile terminal 20 via the provision side communication unit 31 in Fig. 2. For example, in the illustrated case, the provision side control unit 33 obtains "the terminal discrimination information of the mobile terminal 20, which is the transmission destination, for which the target information to be transmitted has been determined in SA1" = "IDB1", obtains "the target information determined to be transmitted to the mobile terminal 20 corresponding to the obtained terminal discrimination information" = "target information of File1", generates a target information signal including "IDB1" and "the target information of File1", and wirelessly transmits the generated target information signal to the mobile terminal 20 via the provision side communication unit 31 in Fig. 2.

Returning to Fig. 13, in SA3, the provision side decision unit 33a of the information provision device 30 updates the transmitted information table 32d (specifically, the information corresponding to the item "TRANSMISSION" in Fig. 11) in Fig. 2. Specifically, first, the provision side decision unit 33a obtains the terminal discrimination information from the target information signal transmitted in SA2. Next, the provision side decision unit 33a identifies the target information identification information for identifying the target information included in the target information signal transmitted in SA2 and obtains the target facility identification information and the transmission device discrimination information corresponding to the identified target information identification information with reference to Fig. 8. Next, the date and time when the target information signal was transmitted in SA2 is identified based on the clocking result of clocking means (not illustrated) of the information provision device 30. After that, the transmitted information table 32d in Fig. 2 is updated by reflecting, as the information corresponding to the item "TRANSMISSION" in Fig. 11, "TERMINAL DISCRIMINATION INFORMATION" in Fig. 11 = "the obtained terminal discrimination information", "TARGET INFORMATION IDENTIFICATION INFORMATION" in Fig. 11 = "the identified target information identification information", "TARGET FACILITY IDENTIFICATION INFORMATION" in Fig. 11 = "the obtained target facility identification information", "TRANSMISSION DEVICE DISCRIMINATION INFORMATION" in Fig. 11 = "the obtained transmission device discrimination information", and "TRANSMISSION DATE AND TIME INFORMATION" in Fig. 11 = "the date and time identified by the clocking means". For example, in the illustrated case, first, "TERMINAL DISCRIMINATION INFORMATION" = "IDB1" is obtained from the target information signal transmitted in SA2. Next, "TARGET INFORMATION IDENTIFICATION INFORMATION" = "File1" for identifying "TARGET INFORMATION" = "the target information of File1" included in the target information signal transmitted in SA2 is identified, and "TARGET FACILITY IDENTIFICATION INFORMATION" = "AA SUPER MARKET" and "TRANSMISSION DEVICE DISCRIMINATION INFORMATION" = "IDA1" corresponding to the identified "File1" are obtained with reference to Fig. 8. Next, the "date and time" = "13:00 on February 1, 2015" at which the target information signal was transmitted in SA2 is identified based on the clocking result of clocking means (not illustrated) of the information provision device 30. After that, as the information corresponding to the item "TRANSMISSION" in Fig. 11, the uppermost information of the drawing among the information of the item "TRANSMISSION" in Fig. 11 is recorded to update the item.

Returning to Fig. 13, on the other hand, the terminal side control unit 25 of the mobile terminal 20 receives the target information signal in SB 1. Specifically, the terminal side control unit 25 wirelessly receives the target information signal transmitted in SA2 via the terminal side communication unit 21 in Fig. 2, obtains the terminal discrimination information from the received target information signal, compares the obtained terminal discrimination information with the terminal discrimination information of its own terminal side storage unit 24, and receives the target information signal when the obtained terminal discrimination information matches the terminal discrimination information of its own terminal side storage unit 24. For example, in the illustrated case, the terminal side control unit 25 wirelessly receives the target information signal transmitted in SA2 via the terminal side communication unit 21 in Fig. 2, obtains "TERMINAL DISCRIMINATION INFORMATION" = "IDB1" from the received target information signal, compares the obtained "IDB1" with "the terminal discrimination information of its own terminal side storage unit 24" = "IDB1", and receives the target information signal because the obtained "IDB1" matches the terminal discrimination information.

Returning to Fig. 13, in SB2, the terminal side control unit 25 of the mobile terminal 20 outputs the target information. Specifically, the terminal side control unit 25 obtains the target information from the target information signal received in SB2, outputs the obtained target information via the output unit 23 in Fig. 2, and presents the target information to the user of the mobile terminal 20. Although the method for outputting the target information is arbitrary, for example, the image of the target information is displayed on a display that is the output unit 23 or the target information is output as a voice from a speaker that is the output unit 23 in the following description. For example, in the illustrated case, the terminal side control unit 25 obtains "the target information" = "the target information of File1" from the target information signal received in SB2 and presents the obtained "target information of File1" to the user of the mobile terminal 20 by displaying an image (such as, for example, a message stating "sale products of AA super market are ...") on the display that is the output unit 23 or outputting a voice (such as, for example, a message stating "sale products of AA super market are ...") from the speaker that is the output unit 23.

Returning to Fig. 13, on the other hand, the discrimination side control unit 15 of the discrimination information transmission device 10 decides whether the transmission condition is met in SC1. The "transmission condition" is the condition for transmitting the transmission device discrimination information. For example, the transmission condition may be met when the user steps on the movable plate 11c in Fig. 3 (the electric power generation unit 12 generates electric power) or when a predetermined time elapses after the user steps on the movable plate 11c (after the electric power generation unit 12 generates electric power). In the following description, it is assumed that the transmission condition is met when the user steps on the movable plate 11c (the electric power generation unit 12 generates electric power). When the user does not step on the movable plate 11c and electric power is not generated, it is decided that the transmission condition is not met (NO in SC1) and SC1 is performed repeatedly until the transmission condition is met. Alternatively, when the user step on the movable plate 11c and electric power is generated, it is decided that the transmission condition is met (YES in SC1) and the processing proceeds to SC2. For example, in the illustrated case, it is decided that the transmit condition is met when the user of the mobile terminal 20 confirms the target information that is an advertisement output in SB2 in Fig. 13, visits the shop R1 in Fig. 1 to get (for example, to purchase sale products or new products shown by the target information) the benefit indicated by the confirmed target information, and steps on the movable plate 11c in Fig. 3.

Returning to Fig. 13, in SC2, the discrimination side control unit 15 of the discrimination information transmission device 10 transmits the discrimination side signal. Specifically, the discrimination side control unit 15 obtains the transmission device discrimination information of its own discrimination side storage unit 13 in Fig. 2, generates a discrimination side signal including the obtained transmission device discrimination information, and wirelessly transmits the generated discrimination side signal to the mobile terminal 20 using the electric power generated by the electric power generation unit 12 in SC1 via the discrimination side communication unit 14. For example, in the illustrated case, the discrimination side control unit 15 obtains "the transmission device discrimination information of its own discrimination side storage unit 13" = "IDA1", generates a discrimination side signal including the obtained "IDA1", and wirelessly transmits the generated discrimination side signal to the mobile terminal 20 using the electric power generated by the electric power generation unit 12 in SC1 via the discrimination side communication unit 14 in Fig. 2.

Returning to Fig. 13, on the other hand, the terminal side control unit 25 of the mobile terminal 20 receives the discrimination side signal in SB3. Specifically, the terminal side control unit 25 wirelessly receives the discrimination side signal transmitted in SC2 via the terminal side communication unit 21 in Fig. 2. For example, in the illustrated case, the terminal side control unit 25 wirelessly receives the discrimination side signal including "IDA1" transmitted in SC2 via the terminal side communication unit 21 in Fig. 2.

Returning to Fig. 13, in SB4, the terminal side control unit 25 of the mobile terminal 20 transmits a terminal side signal. Specifically, the terminal side control unit 25 obtains the transmission device discrimination information from the discrimination side signal received in SB3, obtains the terminal discrimination information of its own terminal side storage unit 24 in Fig. 2, generates a terminal side signal including the obtained transmission device discrimination information and the obtained terminal discrimination information, and wirelessly transmits the generated terminal side signal to the information provision device 30 via the terminal side communication unit 21. For example, in the illustrated case, the terminal side control unit 25 obtains "the transmission device discrimination information received from the discrimination side signal in SB3" = "IDA1", obtains "the terminal discrimination information of its own terminal side storage unit 24" = "IDB1", generates a terminal side signal including the obtained "IDA1" and "IDB1", and wirelessly transmits the generated terminal side signal to the information provision device 30 via the terminal side communication unit 21.

Returning to Fig. 13, on the other hand, the provision side control unit 33 of the information provision device 30 receives the terminal side signal in SA4. Specifically, the provision side control unit 33 wirelessly receives the terminal side signal transmitted in SB4 via the provision side communication unit 31 in Fig. 2. For example, in the illustrated case, the provision side control unit 33 wirelessly receives the terminal side signal including "IDA1" and "IDB1" transmitted in SB4 via the provision side communication unit 31 in Fig. 2.

Returning to Fig. 13, in SA5, the provision side decision unit 33a of the information provision device 30 updates the transmitted information table 32d (specifically, the information corresponding to the item "RECEPTION" in Fig. 11) in Fig. 2. Specifically, the provision side decision unit 33a first obtains the transmission device discrimination information and the terminal discrimination information from the terminal side signal received in SA4. Next, the provision side decision unit 33a identifies the date and time when the terminal side signal was received in SA4 based on the clocking result by the clocking means (not illustrated) of the information provision device 30. Next, the provision side decision unit 33a identifies the mobile terminal 20 in Fig. 2 corresponding to the obtained terminal discrimination information as the transmission source of the terminal side signal. After that, the provision side decision unit 33a updates the transmitted information table 32d in Fig. 2 by reflecting "TRANSMISSION DEVICE DISCRIMINATION INFORMATION" in Fig. 11 = "the obtained transmission device discrimination information" and "RECEPTION DATE AND TIME INFORMATION" in Fig. 11 = "the date and time identified by clocking means" as the information corresponding to the item "RECEPTION" in Fig. 11 to the information corresponding to the mobile terminal 20 identified as the transmission source among the terminal discrimination information in the item "TRANSMISSION" in Fig. 11. For example, in the illustrated case, the provision side decision unit 33a obtains "TRANSMISSION DEVICE DISCRIMINATION INFORMATION" = "IDA1" and "TERMINAL DISCRIMINATION INFORMATION" = "IDB1" from the terminal side signal received in SA4. Next, the provision side decision unit 33a identifies the "date and time" = "13:00 on February 2, 2015" when the terminal side signal was received in SA4 based on the clocking result by the clocking means (not illustrated) of the information provision device 30. Next, the provision side decision unit 33a identifies the mobile terminal 20 in Fig. 2 corresponding to the obtained "IDB1" as the transmission source of the terminal side signal. After that, the provision side decision unit 33a updates (that is, updates the transmitted information table 32d by recording the uppermost information of the drawing among the information of the item "RECEPTION" in Fig. 11) the transmitted information table 32d in Fig. 2 by reflecting "TRANSMISSION DEVICE DISCRIMINATION INFORMATION" in Fig. 11 = "IDA1" and "RECEPTION DATE AND TIME INFORMATION" in Fig. 11 = "13:00 on February 2, 2015", as the information corresponding to the item "RECEPTION" in Fig. 11, to "the information corresponding to the mobile terminal 20 identified as the transmission source among the terminal discrimination information of the item "TRANSMISSION" in Fig. 11" = "IDB1". Now, the information provision processing ends.

### (Processing - information update processing)

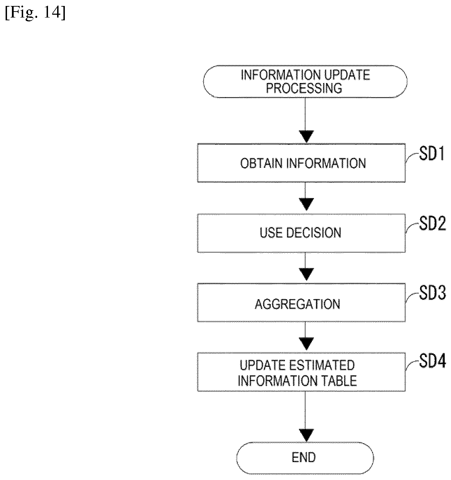

Next, the information update processing will be described. Fig. 14 is a flowchart illustrating the information update processing. The "information update processing" updates the estimated information table 32c in Fig. 2. Although the timing at which this information update processing is started is arbitrary, the processing having been started will be described by assuming that the information update processing is started to be executed repeatedly, for example, at predetermined intervals (such as 10 minutes, one hour, or 10 hours) after the discrimination information transmission device 10, the mobile terminal 20, and the information provision server 30 are powered.

First, as illustrated in Fig. 14, the provision side decision unit 33a of the information provision device 30 obtains information in SD1. Specifically, the provision side decision unit 33a obtains individual pieces of information of the item "TRANSMISSION" and individual pieces of information of the item "RECEPTION" in Fig. 11 with reference to the transmitted information table 32d in Fig. 2. For example, individual pieces of information displayed in the left and right direction of the drawing in Fig. 11 are obtained in the state in which they are associated with each other.

Returning to Fig. 14, in SD2, the provision side decision unit 33a of the information provision device 30 decides whether the target information (also referred to below as simply "the transmitted target information") included in the target information signal transmitted in SA2 in Fig. 13 has been used by the user of the mobile terminal 20 in Fig. 2. Although how to make a decision (referred to below as a use decision) as to whether the target information has been used is arbitrary as long as the decision is based on the information (for example, the information of the transmitted information table 32d) obtained in SD1 in Fig. 14, it is assumed that a decision is made for each user (that is, for each entry having the same terminal discrimination information of the item "TRANSMISSION" in Fig. 11) focusing on the transmission device discrimination information of the item "TRANSMISSION" and the item "RECEPTION" in Fig. 11. Specifically, the first to fourth steps for use decision described below are performed on each piece of the terminal discrimination information of the item "TRANSMISSION" in Fig. 11. More specifically, in the first step, one piece of the transmission device discrimination information of the item "TRANSMISSION" in Fig. 11 is obtained. Next, in the second step, a decision (referred to below as a matching decision) is made as to whether there is information that matches the one piece of transmission device discrimination information obtained in the first step in the transmission device discrimination information of the item "RECEPTION" in Fig. 11 and a decision (referred to below as a time period decision) is made as to whether the period from the date and time identified by the transmission date and time information to the date and time identified by the reception date and time information is equal to or less than a predetermined decision period (for example, one week) about the two pieces of transmission device discrimination information (that is, the transmission device discrimination information of the item "TRANSMISSION" and the transmission device discrimination information of the item "RECEPTION") that match each other. Next, in the third step, based on the decision results of the "matching decision" and the "time period decision" in the second step, a decision is made as to whether the transmitted target information has been used. Specifically, in the third step, when it is decided that there is information that matches the one piece of transmission device discrimination information obtained in the first step in the "matching decision" and the period from the date and time identified by the transmission date and time information to the date and time identified by the reception date and time information about the two pieces of transmission device discrimination information that match each other in the "time period decision" is equal to or less than the predetermined decision period, it is decided that the target information has been used. In contrast, when it is decided that there is no information that matches the one piece of transmission device discrimination information obtained in the first step in the "matching decision" or the period from the date and time identified by the transmission date and time information to the date and time identified by the reception date and time information about the two pieces of transmission device discrimination information that match each other in the "time period decision" is not equal to or less than the predetermined decision period (that is, the period exceeds the predetermined decision period), it is decided that the target information has not been used. Next, in the fourth step, only when it is decided in the third step that the target information transmitted has been used, in the transmission device discrimination information of the item "RECEPTION" in Fig. 11, the number of pieces of the transmission device discrimination information which matches the one piece of transmission device discrimination information obtained in the first step and for which the period from the date and time identified by the transmission date and time information to the date and time identified by the reception date and time information of the one piece of transmission device discrimination information obtained in the first step is equal to or less than the predetermined decision period are aggregated. Then, the first to the fourth steps are performed on all pieces of the transmission device discrimination information of the item "TRANSMISSION" in Fig. 11. That is, a use decision is made on all pieces of the transmitted target information.

For example, for "TERMINAL DISCRIMINATION INFORMATION" = "IDB1" of the item "TRANSMISSION" in Fig. 11, "TRANSMISSION DEVICE DISCRIMINATION INFORMATION" = "IDA1" of the item "TRANSMISSION" in Fig. 11 is obtained in the first step. Next, in the second step, as a result of a "matching decision", it is decided that there is the information (specifically, the uppermost entry "IDA1" and the entry "IDA1" two lines lower than the uppermost entry in "TRANSMISSION DEVICE DISCRIMINATION INFORMATION" of the item "RECEPTION" in Fig. 11) that matches "IDA1" obtained in the first step in the "TRANSMISSION DEVICE DISCRIMINATION INFORMATION" of the item "RECEPTION" in Fig. 11 and, as a result of a "time period decision", it is decided that the period from the date and time identified by the transmission date and time information to the date and time identified by the reception date and time information is equal to or less than the predetermined decision period. Next, in the third step, since it has been decided that there is the information that matches the one piece of transmission device discrimination information obtained in the first step as a result of the "matching decision" in the second step and it has been decided that the period from the date and time identified by the transmission date and time information to the date and time identified by the reception date and time information is equal to or less than the predetermined decision period about the two pieces of the transmission device discrimination information that match each other as a result of the "time period decision" in the second step, it is decided that the target information of "File1" in Fig. 11 has been used. Next, since it has been decided in the third step that the target information transmitted has been used, in the fourth step, two pieces of transmission device discrimination information (specifically, the uppermost entry "IDA1" and the entry "IDA1" two lines lower than the uppermost entry in "TRANSMISSION DEVICE DISCRIMINATION INFORMATION" of the item "RECEPTION" in Fig. 11) that matches "IDA1" obtained in the first step and the period from the date and time identified by the transmission date and time information to the date and time identified by the reception date and time information of the transmission device discrimination information of "IDA1" is equal to or less than the predetermined decision period in the "TRANSMISSION DEVICE DISCRIMINATION INFORMATION" of the item "RECEPTION" in Fig. 11 are aggregated. Then, the first to fourth steps are performed on "TRANSMISSION DEVICE DISCRIMINATION INFORMATION" = "IDA2" of the item "TRANSMISSION" in Fig. 11, it has been decided in the third step that the target information has been used, and one piece of transmission device discrimination information is aggregated in the fourth step.

Returning to Fig. 14, in SD3, the provision side decision unit 33a of the information provision device 30 aggregates the factor information for each of the mobile terminals 20 in Fig. 2 and generates and records the aggregated information table 32e based on the aggregated result. Although any method can be used as the aggregation method in this case as long as the decision result in SD2 is used, the following describes the case in which, for example, the number of pieces (aggregated in the fourth step) of the factor information corresponding to the target information decided to have been used in SD2 are added, the factor information corresponding to the target information decided to have not been used in SD2 is subtracted, division is performed using "the computation result of addition and subtraction" = "the dividend" and "the number of additions and subtractions" = "the divisor", and the division result is aggregated as the average value of the factor information. Specifically, in this method, when the gender information of the factor information is aggregated, the value of the gender information corresponding to the target information decided to have been used in SD2 and the value of the gender information corresponding to the target information decided to have not been used in SD2 are identified with reference to Fig. 8, and the average value is aggregated by performing the addition, subtraction, and division described above. It should be noted that, when the age information of the factor information is aggregated, the average value is aggregated as in the case in which the gender information of the factor information is aggregated. Then, these aggregations are performed for each of the mobile terminals 20 in Fig. 2 (that is, for each piece of "TERMINAL DISCRIMINATION INFORMATION" of the item "TRANSMISSION" in Fig. 11) and the aggregated information table 32e in Fig. 2 is generated and recorded based on the aggregation result.

Since it has been determined that "the target information of File1" and "the target information of File2" have been used for "TERMINAL DISCRIMINATION INFORMATION" = "IDB1", for example, in SD2 in Fig. 14, "the value of gender information corresponding to "the target information of File1"" = "-7" and "the value of gender information corresponding to "the target information of File2"" = "-10" are identified with reference to Fig. 8 as for the gender information, computation of "(-7) × 2 + (-10) × 1 (where "2" is the number of pieces of "the target information of File1" aggregated in the fourth step in SD2 in Fig. 14 and corresponds to "the number of additions and subtractions" for "the target information of File1" and "1" is the number of pieces of "the target information of File2" aggregated in the fourth step in SD2 in Fig. 14 and corresponds to "the number of additions and subtractions" for "the target information of File2")" is performed, division is performed using "the computation result of addition and subtraction" = "-24" as "the dividend" and "the number of additions and subtractions" = "3" as "the divisor", and "the division result" = "-8" is aggregated as the average value of the gender information. In addition, as for the age information, "the value of the age information corresponding to "the target information of File1"" = "1" and "the value of the age information corresponding to "the target information of File2"" = "1" are identified with reference to Fig. 8, computation of "(1) × 2 + (1) × 1" is performed, division is performed using "the calculation result of addition and subtraction" = "3" as "the dividend" and "the number of additions and subtractions" = "3" as "the divisor", and "the division result" = "1" is aggregated as the average value of the age information. Then, these aggregations are performed for each of the mobile terminals 20 in Fig. 2 (that is, for each piece of "TERMINAL DISCRIMINATION INFORMATION" of the item "TRANSMISSION" in Fig. 11) and the aggregated information table 32e in Fig. 2 is generated and recorded based on the aggregation result as illustrated in, for example, Fig. 12.

Returning to Fig. 14, the provision side decision unit 33a of the information provision device 30 updates the estimated information table 32c in Fig. 2 in SD4. Specifically, the provision side decision unit 33a estimates the set to which the user of the mobile terminal 20 belongs based on the aggregated information table 32e in Fig. 2 recorded in SD3 in Fig. 14 and updates the estimated information table 32c based on the estimated set. More specifically, the provision side decision unit 33a first obtains the terminal discrimination information and the gender aggregated value information and the age aggregated value information that correspond to the terminal discrimination information in Fig. 12, identifies the set information corresponding to the obtained gender aggregated value information and the obtained age aggregated value information in Fig. 9, and estimates the set of the identified set information as the set to which the user of the mobile terminal 20 identified by the obtained terminal discrimination information belongs. Next, the above processing is performed on all pieces of the terminal discrimination information in Fig. 12 and then the estimated set information in Fig. 10 is updated (that is, the estimated information table 32c in Fig. 2 is updated) so as to reflect the estimation result.

For example, first, "TERMINAL DISCRIMINATION INFORMATION" = "IDB1", and "GENDER AGGREGATED VALUE INFORMATION" = "-8" and "AGE AGGREGATED VALUE INFORMATION" = "1" corresponding to the terminal discrimination information in Fig. 12 are obtained, "SET INFORMATION" = "CID1" corresponding to the obtained "GENDER AGGREGATED VALUE INFORMATION" = "-8" and "AGE AGGREGATED VALUE INFORMATION" = "1" in Fig. 9 are identified, and the set of "SET INFORMATION" = "CID1" is estimated as the set to which the user of the mobile terminal 20 identified by "TERMINAL DISCRIMINATION INFORMATION" = "IDB1" belongs. Next, the above processing is performed on all pieces of the terminal discrimination information in Fig. 12, the estimated set information in Fig. 10 is updated by, for example, reflecting "ESTIMATED SET INFORMATION" = "CID1" as the estimated set information of "TERMINAL DISCRIMINATION INFORMATION" = "IDB1" in Fig. 10. With this, the information provision processing is completed.

### (Effects of the embodiment)

As described above, according to the embodiment for example, since the presentation of the target information to the user and the decision of use of the presented target information by the user can be performed by deciding whether the target information included in the transmitted target information signal has been used by the user of the mobile terminal 20, the useful target information suitable to the needs of the user can be presented to the user.

In addition, since, for example, the decision of use of the target information by the user, the determination of the target information to be transmitted based on the decision result, and the transmission of the determined target information can be repeated in sequence by determining the target information to be transmitted and wirelessly transmitting the target information signal including the determined target information, more useful target information suitable to the needs of the user can be presented to the user.

In addition, by estimating the sets (sections) to which the users of the mobile terminal 20 belong and determining the target information to be transmitted based on the estimated sets, for example, the target information to be transmitted can be determined for each of the estimated sections. Accordingly, the target information that is useful to the user can be grasped and used for each of the sections and useful target information can be presented by narrowing target (that is, the users to which the target information is presented) for each of the sections.

In addition, since a discrimination side signal including the transmission device discrimination information is transmitted when electric power is generated by a pressure caused when a person directly or indirectly steps on the electric power generation unit 12 fixed to a target facility, it is possible to recognize that the user has visited the target facility based on, for example, the transmission device discrimination information included in the discrimination side signal and improve the usefulness of the target information to be presented to the user.

### [Modification of the embodiment]

Although an embodiment of the invention has been described above, the specific structure and means of the invention can be modified and improved freely within the technical spirit of the invention designated in the appended claims. Such modifications will be described below.

### (About problems to be solved and effects of the invention)

First, the problems to be solved by the invention and the effects of the invention are not limited to the above description and may depend on the practical environment and the structural details of the invention, so part of the above problems may be solved or part of the above effects may be obtained. For example, even if the usefulness of the target information presented by the information presentation system according to the invention is similar to that of the conventional one, when the usefulness is similar to that of the conventional one using the structure different from the conventional one, the problems of the invention are solved.

### (About distribution and integration)

In addition, the electric components described above are functionally conceptual, so the electric components do not need to be configured physically as illustrated in the drawing. That is, the specific forms of distribution and integration of individual parts are not limited to those illustrated in the drawing, so all or part of them may be distributed or integrated functionally or physically in any units depending on the various types of loads and use situations. A "system" according to the application does not need to include a plurality of devices and may include a single device. In addition, a "device" according to this application does not need to be configured by a single device and may include a plurality of devices. For example, the individual parts of the discrimination information transmission device 10, the individual parts of the mobile terminal 20, or the individual parts of the information provision device 30 may be provided in any of the discrimination information transmission device 10, the mobile terminal 20, and the information provision device 30.

### (About shapes, values, structures, and time series)

As for components illustrated in the embodiment or drawings, the shapes, values, structures of a plurality of components, and mutual relationship in time series may be changed or improved arbitrarily within the technical spirit of the invention.

### (About outputting of target information)

In addition, in SC1 in Fig. 13 in the embodiment described above, in order to promote the user of the mobile terminal 20 to step on the movable plate 11c in Fig. 3, the user of the mobile terminal 20 may be guided to step on the movable plate 11c in SB2 in Fig. 13 so that the user can get advantage in SB3 when the user steps on the movable plate 11c according to the guidance. Specifically, a mark (referred to below as a unit mark) is placed in the part of the floor of the target facility in which the discrimination information transmission device 10 (specifically, the electric power generation unit 12) in Fig. 2 is provided and the following processing may be performed when the target information is an advertisement or the target information is a coupon.

In the case in which the target information is an advertisement, specifically, when the discrimination side signal is received in SB3 in Fig. 13 by stepping on the unit mark (that is, by stepping on the movable plate 11c in Fig. 3), the mobile terminal 20 may store the transmission device discrimination information included in the received discrimination side signal and cause the cash register of the shop to display information about the transmission device discrimination information of the mobile terminal 20, so that only the user (that is, the user for which information about the transmission device discrimination information is displayed) having the mobile terminal 20 in which the transmission device discrimination information is stored can get the merit (for example, discount purchase of sale products, priority purchase of new products, or the like) indicated by the advertisement which is the target information.

Alternatively, in the case in which the target information is a coupon, specifically, when the discrimination side signal is received in SB3 in Fig. 13 by stepping on the unit mark (that is, by stepping on the movable plate 11c in Fig. 3), the mobile terminal 20 may store the transmission device discrimination information included in the received discrimination side signal and the coupon which is the target information may become enabled (that is, the coupon becomes available) when the transmission device discrimination information is stored.

When a plurality of discrimination information transmission devices 10 is provided in one target facility to specifically grasp the target information that interests the user having visited the target facility, a plurality of "unit marks" corresponding to the plurality of discrimination information transmission devices 10 may have different aspects (such as, for example, the color, shape, and pattern) so that the user can identify the unit mark (that is, the movable plate 11c in Fig. 3) on which the user should step. In this case, for example, a red circle may be used as the unit mark of the discrimination information transmission device 10 in Fig. 2 corresponding to the target information which is an advertisement and a green rectangle may be used as the unit mark of the discrimination information transmission device 10 corresponding to the target information which is a coupon. In addition, information stating "Sale products of AA super market are ... Please step on the red circular unit mark." may be output when the target information which is an advertisement is output in SB2 in Fig. 13 or information stating "A coupon can be used at the AA super market. Please step on the green rectangular unit mark." may be output when the target information which is a coupon is output in SB2 in Fig. 13.

### (About aggregation of factor information)

In addition, in SD3 in Fig. 14 in the above embodiment, processing may be performed by the first method and the second method described below, which are other than the method illustrated in the embodiment, to aggregate factor information. First, "the first method" aggregates factor information focusing on only the target information determined to have been used in SD2 in Fig. 14. Specifically, this method adds a plurality of pieces (aggregated in the fourth step in SD2) of factor information corresponding to the target information decided to have been used in SD2 as in the case described in the embodiment, performs division using "the addition result" = "the dividend" and "the number of additions" = "the divisor", and aggregates the division result as the average value of the factor information. In addition, "the second method" aggregates the factor information without using the decision result in SD2 in Fig. 14. Specifically, this method focuses on only the transmission device discrimination information of the item "RECEPTION" in Fig. 11, adds the factor information associated with the target information corresponding to the transmission device discrimination information, performs division with "the addition result" = "the dividend" and "the number of additions" = "the divisor", and aggregates the division result as the average value of the factor information.

### (About determination of target information)

Although the estimated set information corresponding to the terminal discrimination information of the mobile terminal 20 which is the transmission destination is identified in Fig. 10, the target information identification information corresponding to the identified estimated set information is obtained in Fig. 8, and the target information identified by the obtained target information identification information is determined as the target information to be transmitted in SA1 of the Fig. 13 in the above embodiment, the invention is not limited to the embodiment. For example, the target information to be transmitted may be determined by the following determination method (referred to below as the determination method according to the modification) in addition to the determination method according to the embodiment. Specifically, this method identifies the estimated set information corresponding to the terminal discrimination information of the mobile terminal 20 which is the transmission destination in Fig. 10, obtains the target information identification information other than the target information identification information corresponding to the identified estimated set information in Fig. 8, and determines the target information identified by the obtained target information identification information as the target information to be transmitted. When the information provision processing in Fig. 13 is repeatedly performed, since the target information other than the target information corresponding to the estimated set information can be transmitted and presented to the user by determining the target information to be transmitted using "the determination method according to the modification", for example, every predetermined number of times (for example, three times, five times, or ten times) in SA1 in Fig. 13, processing can be performed in consideration of the target information other than the target information corresponding to the estimated set information in SD2 to SD4 in Fig. 14 and the estimation accuracy of estimation of the set to which the user of the mobile terminal 20 belongs performed in SD4 in Fig. 14 can be improved. In addition, the target information corresponding to the estimated set information and the target information other than the target information corresponding to the estimated set information may be transmitted in SA1 and SA2 in Fig. 13 at a predetermined ratio using the concept of the modification.

As for this ratio, specifically, it is assumed that SA1 and SA2 in Fig. 13 are repeatedly executed with respect to one mobile terminal 20, the ratio of the number of pieces of "the target information corresponding to the estimated set information" to the number of pieces of "the target information other than the target information corresponding to the estimated set information" may be increased as the number of executions of SA1 and SA2 is increased.

### (About displaying of target information)

In addition, the target information may be output using a method other than the methods described in SA1, SA2, SA3, SB1, and SB2 in Fig. 13. Specifically, the mobile terminal 20 in Fig. 2 may mainly obtain the target information from the information provision device 30, select (that is, filter) the target information associated with the set information to which itself (that is, the mobile terminal 20) belongs in the obtained target information, and output (that is, for example, display) the selected target information.

### (About set information table)

Although the set information is included in the set information table in Fig. 8 in the above embodiment, the invention is not limited to the embodiment. For example, the set information may be omitted. In this case, the target information identification information having a value close to the aggregated value information in Fig. 12 may be identified referring to Fig. 8 and then the target information to be transmitted may be determined in SA1 in Fig. 13. In addition, although the set information table is recorded based on a questionnaire of the users or the like in the above embodiment, the invention is not limited to the embodiment. For example, the input means (not illustrated) of the information provision device 30 in Fig. 2 may be used to input and record the set information table without doing a questionnaire of the users. In addition, at least part (such as, for example, factor information and transmission device discrimination information) of the individual pieces of information in Fig.8 may be determined and then remotely transmitted and recorded to the information provision device 30 in Fig. 2 by the shop keeper of the target facility via own terminal. Specifically, the terminal of the shop keeper may be provided with an interface through which any items including genders, target ages, bargain products, brand products, and the like can be input and then the information input to these items of the interface may be transmitted and recorded from the terminal of the shop keeper to the information provision device 30. In such configuration, the information of the set information table can be recorded rapidly and accurately.

### (About electrical power generation unit)

Although the electric power generation unit 12 in Fig. 2 is configured as floor type electric power generation means fixed to the floor in the above embodiment, the invention is not limited to the embodiment. For example, the electric power generation unit 12 may be configured arbitrarily as long as the electric power generation unit 12 is fixed to the target facility and generates electric power using environment energy. Specifically, the electric power generation unit 12 may be configured as switch type electric power generation means having a push button that is fixed to the wall or the like of the target facility and generates electric power using a depression pressure caused when a person presses the push button. Alternatively, the electric power generation unit 12 may be configured as door knob type electric power generation means having a power generation mechanism that is fixed to the door knob of the target facility and generates electric power using an operation force caused when a person operates the door knob.

### (About update of estimated information table (part 1))

In addition, a method other than that described in the above embodiment may be used to update the estimated information table in Fig. 10. Specifically, in order to appropriately classify the users of the mobile terminal 20, the following method may be used to appropriately reflect information about the target facility (that is, the used target information) visited by the user when the estimated information table in Fig. 10 is updated. Specifically, this method performs statistical processing in consideration of dispersion distribution, more specifically computes the dispersion of individual pieces of factor information in SD3 in Fig. 14, and updates the estimated information table in Fig. 10 in consideration of the computed dispersion. If this method is used, even when, for example, the user is a housewife and frequently uses the target information (for example, information about the clothes of the husband of the user) having "GENDER INFORMATION" = "+10" (that is, the value closest to male tendency) and the target information (for example, information about the clothes of the user) having "GENDER INFORMATION" = "-10" (that is, the value closest to female tendency), since the estimated information table in Fig. 10 is updated based on the value and the frequency (dispersion) of "GENDER INFORMATION", the appropriate updating of the estimated information table in Fig. 10 may be enabled instead of, for example, the aggregation of "GENDER INFORMATION" = "0" as the average value (that is, aggregation using the method in the embodiment). In addition, the estimated information table in Fig. 10 may be updated using a known artificial intelligence method or a known deep learning method together with or instead of the method in the embodiment or the method in the modification.

### (About update of estimated information table (part 2))

In addition, the estimated information table in Fig. 10 may be updated without performing a use decision in SD2 in Fig. 14 in the above embodiment. Specifically, only "TERMINAL DISCRIMINATION INFORMATION" of the item "TRANSMISSION" and "TRANSMISSION DEVICE DISCRIMINATION INFORMATION" of the item "RECEPTION" in Fig. 11 are stored (that is, information about history indicating whether to use the target information adopted in the embodiment is not stored) and the estimated information table in Fig. 10 may be updated by applying a method including an element (for example, generation, evaluation, selection, chiasma, mutation, end condition decision, or the like of a so-called initial group) defined by a known hereditary algorithm. Although this application method is arbitrary, a method including elements concerning the cluster coincidence and the entire shop visit count may be used as, for example, an evaluation function for evaluating the estimated information table.

### (About use of information presentation system (part 1))

In addition, after improving the user usefulness of the target information to be presented by repeatedly performing the processing described in the embodiment or the modification in the information presentation system 1 in the above embodiment in Fig. 2, the target information may be transmitted via a predetermined application. Here, the "particular application" is an application, installed and used in the mobile terminal 20, that needs to enable the wireless communication function (that is, enable communication) between the mobile terminal 20 and the information provision device 30. For example, the "particular application" is a position management application or the like that manages the position of a person to be searched for. Such configuration can promote the installation of a particular application and the validation of the wireless communication function and can put a particular application into widespread use.

### (About use of information presentation system (part 2))

In addition, the aggregated information table 32e in the above embodiment in Fig. 2 may be used to grasp the tendency of a set and present the target information based on the grasped result. Specifically, after improving the accuracy of the aggregated information table 32e in Fig. 2 by repeatedly performing the information provision processing in Fig. 13 and the information update processing in Fig. 14, the number of users belonging to the individual sets (combinations of individual pieces of factor information) can be grasped or temporal changes in the number of users belonging to the individual sets can be grasped for all users of the information presentation system 1 in Fig. 2. Then, the needs of the target information are decided for all users of the information presentation system 1 with reference to the grasped results and the information in Fig. 8 and the target information may be presented based on the decided needs. In such configuration, the usefulness of the target information presented to the user can be further improved. In addition, by deciding the needs of the target information for all users of the information presentation system 1 and presenting information about the decided needs to the target facility (such as, for example, a shop), the target facility can use the information for a product lineup or advertisement.

### (Note)

In order to solve the above problem and achieve the above object, an information presentation system according to note 1, comprising: a discrimination information transmission device; a mobile terminal; and an information provision device that transmits, to the mobile terminal, a target information signal including target information that is information about a target facility, wherein the discrimination information transmission device includes electric power generation means being fixed to the target facility and generates electric power using environment energy, discrimination side storage means that stores transmission device discrimination information for uniquely discriminating the discrimination information transmission device, and discrimination side transmission means that wirelessly transmits a discrimination side signal including the transmission device discrimination information stored by the discrimination side storage means using the electric power generated by the electric power generation means when a transmission condition is met, wherein the mobile terminal includes terminal side storage means that stores terminal discrimination information for uniquely discriminating the mobile terminal, terminal side reception means that receives the discrimination side signal transmitted from the discrimination side transmission means of the discrimination information transmission device, and terminal side transmission means that wirelessly transmits a terminal side signal including the transmission device discrimination information included in the discrimination side signal received by the terminal side reception means and the terminal discrimination information stored by the terminal side storage means, and wherein the information provision device includes provision side storage means that mutually associates and stores the terminal discrimination information of the mobile terminal that is a transmission destination of the transmitted target information signal, information for identifying the target information included in the transmitted target information signal, information for identifying the target facility related to the target information, and the transmission device discrimination information of the discrimination information transmission device having the electric power generation means provided in the target facility, provision side reception means that receives the terminal side signal transmitted from the terminal side transmission means of the mobile terminal, and provision side decision means that makes a decision as to whether the target information included in the transmitted target information signal has been used by a user of the mobile terminal based on the transmission device discrimination information and the terminal discrimination information included in the terminal side signal received by the provision side reception means and the information stored by the provision side storage means.

The information presentation system according to note 2 is the information presentation system according to note 1, wherein the information provision device includes provision side determination means that determines the target information to be transmitted based on a result of the decision by the provision side decision means, and provision side transmission means that wirelessly transmits the target information signal including the target information determined by the provision side determination means to the mobile terminal.

The information presentation system according to note 3 is the information presentation system according to note 2, wherein the provision side determination means of the information provision device estimates a section to which the user of the mobile terminal belongs and determines the target information to be transmitted based on the estimated section.

The information presentation system according to note 4 is the information presentation system according to anyone of notes 1 to 3, wherein the electric power generation means of the discrimination information transmission device is floor type electric power generation means that generates electric power using a pressure caused when a person directly or indirectly steps on the electric power generation means.

### (Advantageous Effects of notes)

According to the information presentation system according to note 1, since the presentation of the target information to the user and the decision of use of the presented target information by the user can be performed by deciding whether the target information included in the transmitted target information signal has been used by the user of the mobile terminal, the useful target information suitable to the needs of the user can be presented to the user.

According to the information presentation system according to note 2, since, for example, the decision of use of the target information by the user, the determination of the target information to be transmitted based on the decision result, and the transmission of the determined target information can be repeated in sequence by determining the target information to be transmitted and wirelessly transmitting the target information signal including the determined target information, more useful target information suitable to the needs of the user can be presented to the user. Especially, by performing the processes repeatedly, it is possible to build a cycle in which an accuracy of selection of useful target information is improved, thereby the user usefulness is further improved, thereby an accuracy of selection of useful target information is further improved, so that it will be possible to establish a commercially advantageous position.

According to the information presentation system according to note 3, by estimating the sets (sections) to which the users of the mobile terminal belong and determining the target information to be transmitted based on the estimated sets, for example, the target information to be transmitted can be determined for each of the estimated sections. Accordingly, the target information that is useful to the user can be grasped and used for each of the sections and useful target information can be presented by narrowing target (that is, the users to which the target information is presented) for each of the sections.

According to the information presentation system according to note 4, since a discrimination side signal including the transmission device discrimination information is transmitted when electric power is generated by a pressure caused when a person directly or indirectly steps on the electric power generation unit fixed to a target facility, it is possible to recognize that the user has visited the target facility based on, for example, the transmission device discrimination information included in the discrimination side signal and improve the usefulness of the target information to be presented to the user.

### [Description of Reference Numerals and Signs]

1: information presentation system
10: discrimination information transmission device
11: cabinet
11a: fixed plate
11b: supporting plate
11c: movable plate
12: electric power generation unit
12a: electric power generation module
12b: electric power generation body
12c: diaphragm
12d: piezoelectric element
12e: peripheral spacer
12f: central spacer
13: discrimination side storage unit
14: discrimination side communication unit
15: discrimination side control unit
20: mobile terminal
21: terminal side communication unit
22: input unit
23: output unit
24: terminal side storage unit
25: terminal side control unit
30: information provision device
31: provision side communication unit
32: provision side storage unit
32a: set information table
32b: factor information table
32c: estimated information table
32d: transmitted information table
32e: aggregated information table
33: provision side control unit
33a: provision side decision unit
33b: provision side determination unit
R1: shop
R2: shop

## Claims

1. An information presentation system comprising:
a discrimination information transmission device;
a mobile terminal; and
an information provision device that transmits, to the mobile terminal, a target information signal including target information that is information about a target facility,
wherein the discrimination information transmission device includes electric power generation means being fixed to the target facility and generates electric power using environment energy,
discrimination side storage means that stores transmission device discrimination information for uniquely discriminating the discrimination information transmission device, and
discrimination side transmission means that wirelessly transmits a discrimination side signal including the transmission device discrimination information stored by the discrimination side storage means using the electric power generated by the electric power generation means when a transmission condition is met,
wherein the mobile terminal includes
terminal side storage means that stores terminal discrimination information for uniquely discriminating the mobile terminal,
terminal side reception means that receives the discrimination side signal transmitted from the discrimination side transmission means of the discrimination information transmission device, and
terminal side transmission means that wirelessly transmits a terminal side signal including the transmission device discrimination information included in the discrimination side signal received by the terminal side reception means and the terminal discrimination information stored by the terminal side storage means, and
wherein the information provision device includes
provision side storage means that mutually associates and stores the terminal discrimination information of the mobile terminal that is a transmission destination of the transmitted target information signal, information for identifying the target information included in the transmitted target information signal, information for identifying the target facility related to the target information, and the transmission device discrimination information of the discrimination information transmission device having the electric power generation means provided in the target facility,
provision side reception means that receives the terminal side signal transmitted from the terminal side transmission means of the mobile terminal, and
provision side decision means that makes a decision as to whether the target information included in the transmitted target information signal has been used by a user of the mobile terminal based on the transmission device discrimination information and the terminal discrimination information included in the terminal side signal received by the provision side reception means and the information stored by the provision side storage means.

2. The information presentation system according to claim 1,
wherein the information provision device includes
provision side determination means that determines the target information to be transmitted based on a result of the decision by the provision side decision means, and
provision side transmission means that wirelessly transmits the target information signal including the target information determined by the provision side determination means to the mobile terminal.

3. The information presentation system according to claim 2,
wherein the provision side determination means of the information provision device estimates a section to which the user of the mobile terminal belongs and determines the target information to be transmitted based on the estimated section.

4. The information presentation system according to any one of claims 1 to 3,
wherein the electric power generation means of the discrimination information transmission device is floor type electric power generation means that generates electric power using a pressure caused when a person directly or indirectly steps on the electric power generation means.
